Europäisches Patentamt

**European Patent Office**

**Office européen des brevets**

(11) Publication number: **0 197 515**
**A1**

(12) # EUROPEAN PATENT APPLICATION

(21) Application number: **86104564.9**

(22) Date of filing: **03.04.86**

(51) Int. Cl.⁴: **G 11 B 17/035**

(30) Priority: **04.04.85 JP 71341/85**

(43) Date of publication of application:
**15.10.86 Bulletin 86/42**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Okamoto, Yoshio Fujitsu Limited Patent Department**
**Kosugi Fujitsu Building 1812-10 Shimonumabe**
**Nakahara-ku Kawasaki-shi Kanagawa 211(JP)**

(72) Inventor: **Yodoshi, Hiroyuki Fujitsu Limited Patent Departmen**
**Kosugi Fujitsu Building 1812-10 Shimonumabe**
**Nakahara-ku Kawasaki-shi Kanagawa 211(JP)**

(72) Inventor: **Hasegawa, Hiroshi Fujitsu Limited Patent Departmen**
**Kosugi Fujitsu Building 1812-10 Shimonumabe**
**Nakahara-ku Kawasaki-shi Kanagawa 211(JP)**

(72) Inventor: **Kimura, Takashi Fujitsu Limited Patent Departmen**
**Kosugi Fujitsu Building 1812-10 Shimonumabe**
**Nakahara-ku Kawasaki-shi Kanagawa 211(JP)**

(74) Representative: **Sunderland, James Harry**
**HASELTINE LAKE & CO Hazlitt House 28 Southampton Buildings Chancery Lane**
**London WC2A 1AT(GB)**

(54) **Mechanism for a floppy disc driver.**

(57) A mechanism of a floppy disc driver, for soft landing a magnetic head (50) on a surface of a floppy disc (70) inserted in the driver, comprising:

a case (1), arranged to receive the disc (70) upon insertion into the driver, moveable horizontally (that is, in the direction of insertion of the disc) and vertically,

means (50) linking vertical movement of the case (1) to movement of the head (50) into contact with the surface of the disc,

a plate (2), extending horizontally, slideable horizontally,

damper means (32, 40, 41) operable to damp horizontal sliding motion of the plate (2), and

coupling means (4, 6, 34), coupling vertical movement of the case (1) with horizontal sliding motion of the plate (2).

./...

Mechanism for a floppy disc driver.

The present invention relates to a mechanism for a floppy disc driver.

Floppy discs are widely used as a cheap and convenient memory medium in a variety of computer and information processing equipment. A magnetic head is contacted with a surface of the floppy disc, which surface is coated with magnetic medium, to magnetically write information or read out written information on the disc. When the floppy disc is loaded into a floppy disc driver (called a disc driver hereinafter), it is important that the magnetic head lands gently on the surface of the floppy disc, to protect the disc and the magnetic head from scratching or damage.

An ordinary disc driver, used for 8 inch or 5.25 inch floppy discs, is provided with means for soft landing a magnetic head on the surface of a floppy disc. For instance, the magnetic head is landed gently on the surface of the floppy disc by movement of a hand-driven lever which also causes closing of an opening for insertion of the floppy disc into the disc driver.

Recently, floppy discs of reduced size, 3.5 inch for example, have come into use. At the same time greater reliability and usability of floppy discs and drivers have been pursued. Such a reduced size floppy disc or diskette is carried in a hard case or cassette.

Using such cassettes, floppy disc reliability has been increased and disc loading and unloading, into/out of a disc driver, has become simpler and easier. That is, a disc has only to be pushed into a slot in a diskette driver; there is no need to move a lever to close an opening and so on. Unloading is also simplified so as to require only the pushing of a button.

To realize such convenience, it is necessary to devise a new means for soft landing a magnetic head, which new means is suitable for the new mechanisms employed.

Because a disc cassette is loaded and "clamped" in a disc driver by spring action, there is no opportunity for moving a lever by hand.

A mechanism for setting a disc cassette has been disclosed, for example, in provisional publication of Japanese Utility Model, JITSUKAI 58-26770, August 10, 1983 by Y. Obama et al.

A floppy disc or a magnetic head of a disc driver can easily be scratched or damaged by shock if disc and head are crashed into each other when the disc is loaded into the driver. Usually, therefore, a disc driver is provided with a damping mechanism to reduce such shock.

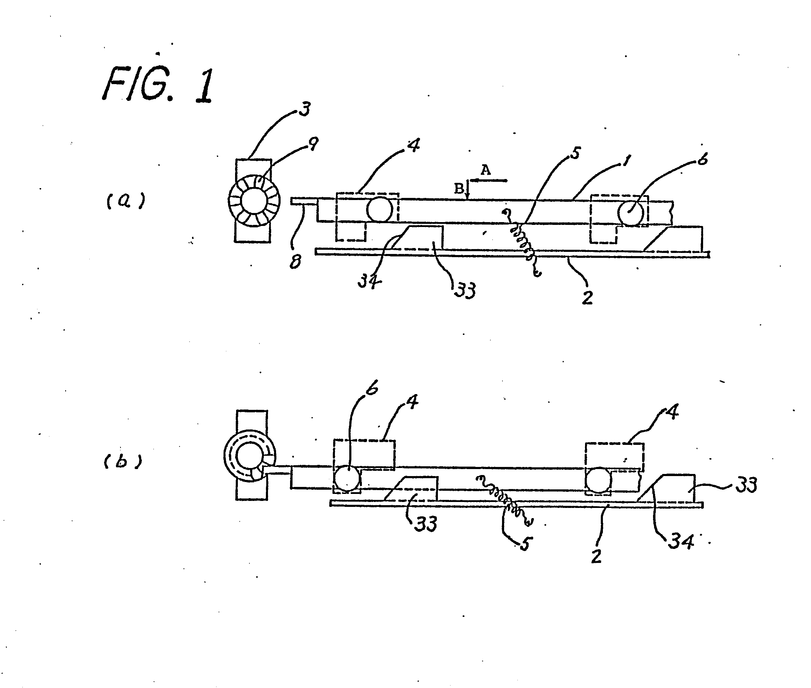

An example of a mechanism for loading and unloading a floppy disc is schematically illustrated in Fig. 1.

Fig. 1 gives schematic side views (a and b) of a disc loading mechanism, illustrating the operational principle of the mechanism.

A floppy disc cassette (not shown) is inserted into a case 1 via an opening provided on the right side of the case, as seen in the Figure. The cassette is pushed towards the left against the force of a spring 5 which urges the case 1 rightwards and downwards. The case 1 is horizontally slidable on rollers 6 provided on two sides of the case 1 (one side only of the case is shown in Fig. 1).

In Fig. 1, (a) shows the condition of the mechanism when a floppy disc (not shown) has been inserted into the case, and it has just begun to slide to the left.

The rollers 6 roll and are guided along L-shaped windows 4 (two of which are indicated by broken lines in the Figure). Such windows are opened in both side walls of the disc driver (not shown). When the case 1 is slid to the left, in the direction of arrow A, and the rollers 6 pass the corners of L-shaped windows 4 (L-windows hereinafter), the case 1 is pulled down, by the spring 5, vertically in the direction of arrow B, along the vertical branches of the L-windows. This condition of the mechanism is shown in Fig. 1(b). The case 1 is fixed in this position hanged by or held in the vertical branches of the L- windows 4. A magnetic head of the disc driver is supported at its one end by the case 1, so that it is shifted down as the case 1 moves downward. When the case 1 is stopped in the position as shown in Fig. 1(b), the magnetic head is contacted with the disc surface, and the loading of the disc is completed.

The disc driver is provided with an ejection plate 2 which comprises pushers 33 having tapers 34. Normally the ejection plate 2 is urged to the right by a spring (not shown). The process of unloading a floppy disc from the disc driver is the reverse of the above-described loading process. First, the ejection plate 2, which is provided beneath the case 1, is pushed and slid leftwards by hand. The tapers 34 push up the rollers 6, so the case 1 is shifted up and the magnetic head is lifted up from the disc surface. Then the case is urged to the right by the spring 5 and slides to the right, and the floppy disc can be removed.

Activated by the vertical motion of the case 1, a magnetic head (not shown) supported by the case is lowered or lifted, and contacted with or separated from the surface of the floppy disc.

An example of a mechanism for contacting a magnetic head with a disc surface is disclosed in, for example, U.S. Patent 4 151 573 Tandon et al.

In order to reduce shock, the vertical motion of the case 1 must be slowed down.

In a previous disc driver, an oil damped pinion is used to slow down the vertical motion of the case 1. As shown in Fig. 1 (a), the case 1 is provided with a projection 8 and a pinion 9 which is mounted on an oil damper 3, for example. When the case 1 is pushed to the left, the projection 8 gears with the pinion 9. When the case 1 is pulled down in the direction of arrow B, the pinion 9 is rotated by the projection 8, as shown in Fig. 1(b). Since the rotation of the pinion 9 is damped by oil in the damper 3, the vertical motion of the case 1 is slowed down. Thus, the motion of the magnetic head is slowed down, and shock is reduced.

The previous mechanism as described above, however, involves the following defects.

The positional relationship between the projection 8 and the pinion 9 must be maintained very precisely. If the coupling between the projection 8 and the pinion 9 is loose, the motion of the case 1 and hence that of the magnetic head becomes clumsy, and the damping effect is lost. Therefore, the components of the damping mechanism must be fabricated accurately, and delicate, careful and precise assembly is necessary. This increases the cost of parts and assembly.

The projection 8 as shown in Fig. 1 cannot be provided in a central region of the case 1 (when the case is seen in a top view). This is because the disc driver is provided with many parts and mechanisms (not shown in Fig. 1), for example a mechanism for rotating the disc with a constant speed, a mechanism for shifting the magnetic head in a radial direction with respect to a disc, to enable reading and writing of information on a predetermined track on the disc surface, and a mechanism for moving the magnetic head up or down when the floppy disc is loaded into or unloaded from the disc driver. All these mechanisms must be installed in a limited, small space within the disc driver. These mechanisms are very important and have priority for positioning towards the centre of the disc driver. Accordingly, there remains only a peripheral region, only at one side, of the disc driver which is available for the projection 8, the pinion 9 and the damper 3.

Thus, the projection 8 and the pinion 9 must be positioned only at one side of the case 1. This can cause the case 1 to twist and can cause its motion to be clumsy. Sometimes the twisted cover of a floppy disc contacts the disc surface to cause scratching.

It will be clear that the above-mentioned defects have undesirable effects on assembly cost, reliability and life of the disc driver.

According to the present invention there is provided a floppy disc driver mechanism for bringing about gentle contact between a magnetic head of the driver and a surface of a floppy disc when the floppy disc is loaded into the floppy disc driver, comprising:

a case into which the floppy disc is inserted, said case being movable horizontally (in parallel with the main surfaces of the inserted floppy disc) and vertically (orthogonally or perpendicularly with respect to the main surfaces of the inserted floppy disc) in accordance with a cut window arrangement provided on two sides of the floppy disc driver;

an arm supporting the magnetic head, a portion of the arm being supported by the case so as to provide up/down movement of the magnetic head away from/towards the surface of the floppy disc accordingly as the case moves vertically;

an ejection plate provided in parallel to the case, being horizontally slidable;

coupling means, operable to couple sliding motion of the ejection plate to vertical motion of case; and

damping means, operable to damp sliding motion of the ejection plate.

An embodiment of the present invention can provide a mechanism for a floppy disc driver which allows a magnetic head to be landed gently onto the surface of a floppy disc.

An embodiment of the present invention can provide a damping mechanism for motion of a disc driver to reduce shock when a magnetic head lands on the surface of a floppy disc when the disc is loaded into the disc driver.

An embodiment of the present invention can provide a damping mechanism such that a magnetic head gently contacts the surface of a floppy disc, to protect the magnetic medium of the disc, or the magnetic head, from scratching or damage, caused especially when loading or unloading the floppy disc into or out of the floppy disc driver.

An embodiment of the present invention can reduce scratching or damage to floppy discs and to a magnetic head of a floppy disc driver.

An embodiment of the present invention can provide improvement of the mechanism of a floppy disc driver to make its operation smoother, its assembly easier, and its reliability greater.

In an embodiment of the present invention the motion of the case is coupled to that of the ejection plate, and the motion of the ejection plate is slowed down by a damper. In the previous mechanism described above, the motion of the case and ejection plate are independent of each other. In an embodiment of the invention, on the contrary, up and down motion of a cassette case is transferred to the motion of the ejection plate, and the latter is slid horizontally by vertical motion of the case. Accordingly, by slowing down the motion of the ejection plate with a damper mechanism, up and down motion of the case is slowed down and smoothed out. The magnetic head is supported by the case, and so downward or upward motion of the magnetic head is slowed down and smoothed, thus the shock of the magnetic head landing on the disc surface is reduced.

In its motion (including up and down motion) the case is, in a particular arrangement employed in an example of an embodiment of the present invention, supported by four rollers, provided on both sides of the case, which roll along guide slopes provided on the ejection plate. Thereby, twisting of the case is avoided.

With the configuration of an embodiment of the invention, damping of up and down motion of the case is replaced by damping of horizontal sliding motion of the ejection plate. Damping of the horizontal motion of the ejection plate is much easier to accomplish. As a damping mechanism for this purpose, an ordinary rack and pinion system is applicable. Namely, a rack is provided on one side of the ejection plate, and a pinion supported by an oil damper is geared to the rack. Since the ejection plate moves only in one horizontal direction, the rack and pinion can be always geared to each other. Such rack and pinion mechanisms are very popular, and so there are many parts available on the market. Therefore, production and assembly costs are reduced to a greater extent.

Reference is made, by way of example, to the accompanying drawings, in which:

Fig. 1 gives schematic side views of a previously proposed disc loading mechanism of a disc driver, illustrating operational principles,

(a) illustrates the operational condition of the mechanism when a floppy disc is inserted into the case and the case has just begun to slide, and

(b) illustrates the operational condition of the mechanism when the case has moved down in correspondence with vertical branches of L-shaped windows;

Fig. 2 gives schematic side views of a disc loading mechanism in accordance with an embodiment of the present invention, illustrating operational principles,

(a) illustrates the operational condition of the mechanism when a floppy disc is inserted into the case and the case has just begun to slide,

(b) illustrates the operational condition when the case is pulled down in correspondence to guide slopes on pushers, and a magnetic head is starting to move down to contact the disc, and

(c) illustrates the condition when the case is completely pulled down, and the magnetic head is contacted with the surface of the floppy disc;

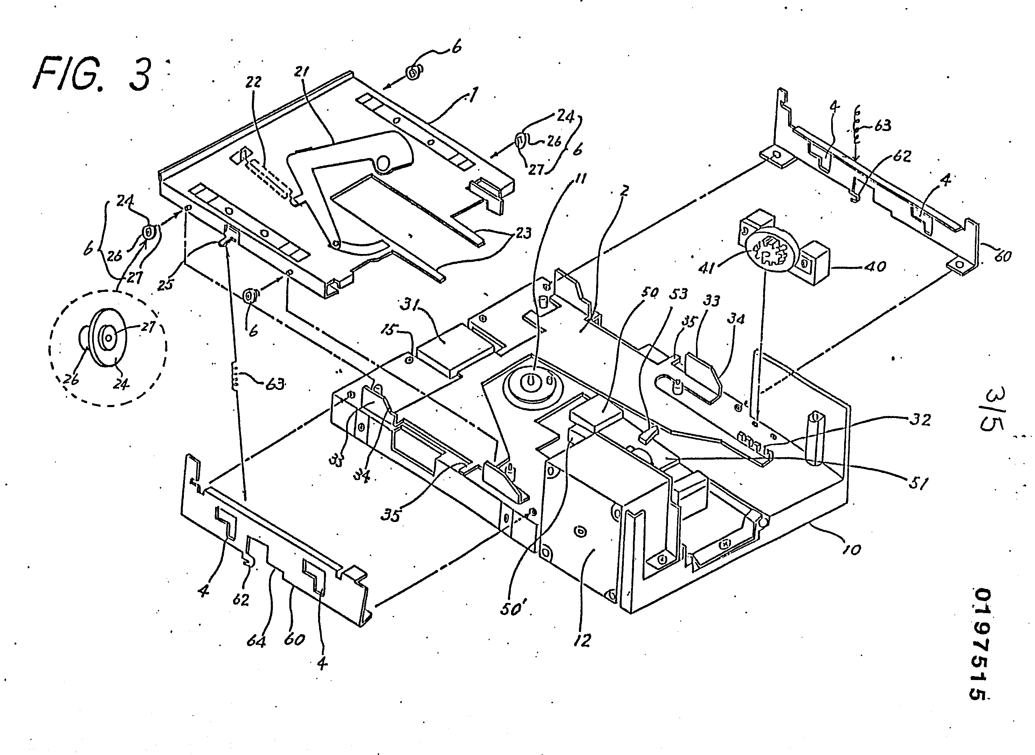

Fig. 3 is an exploded perspective view of a floppy disc driver having a mechanism in accordance with an embodiment at the present invention, illustrating shapes and relative positions of parts;

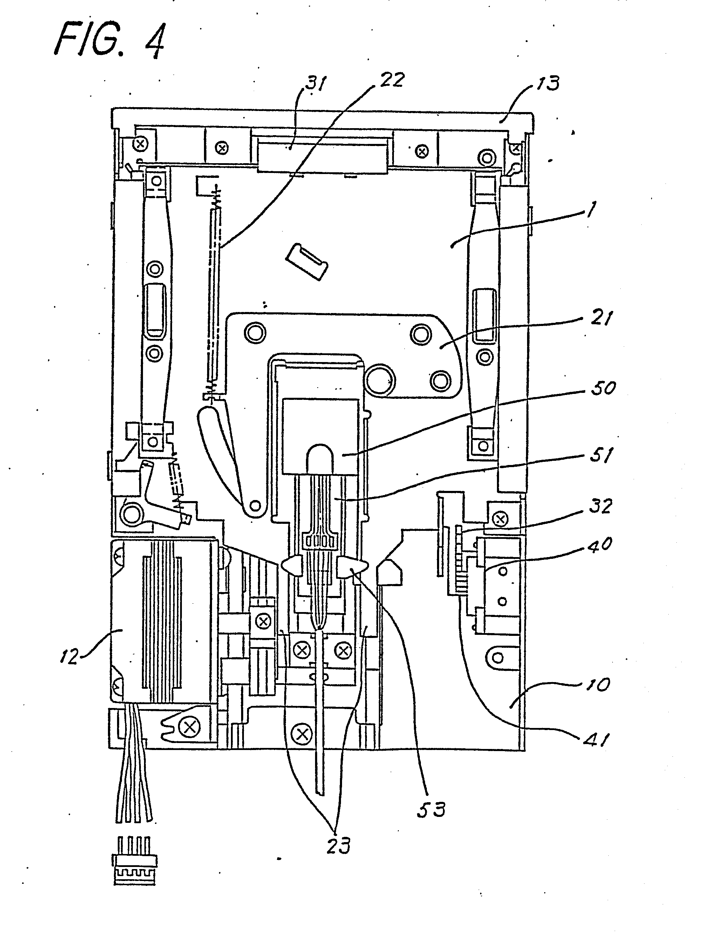

Fig. 4 is a plan view of the floppy disc driver of Fig. 3; and

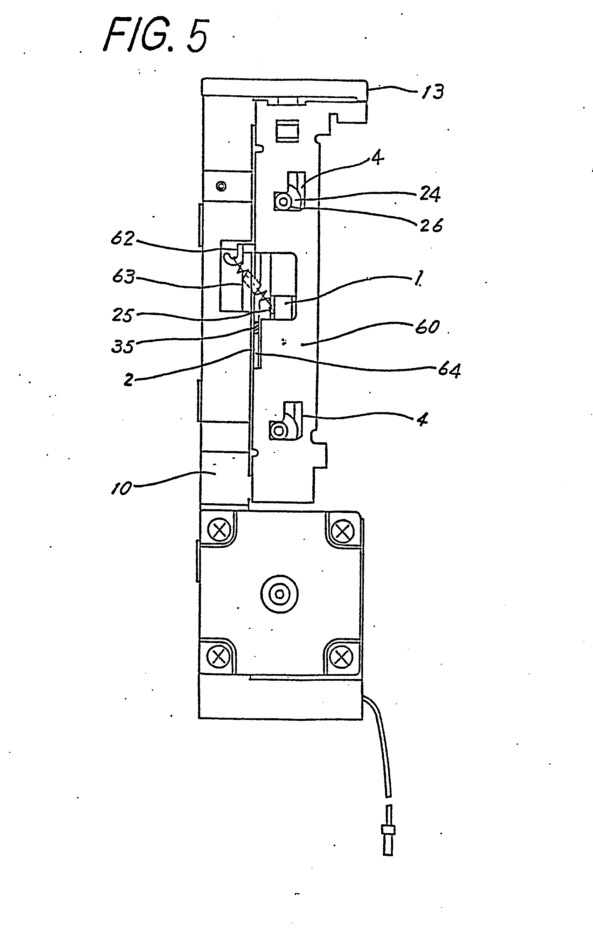

Fig. 5 is a side view of the floppy disc driver of Fig. 3.

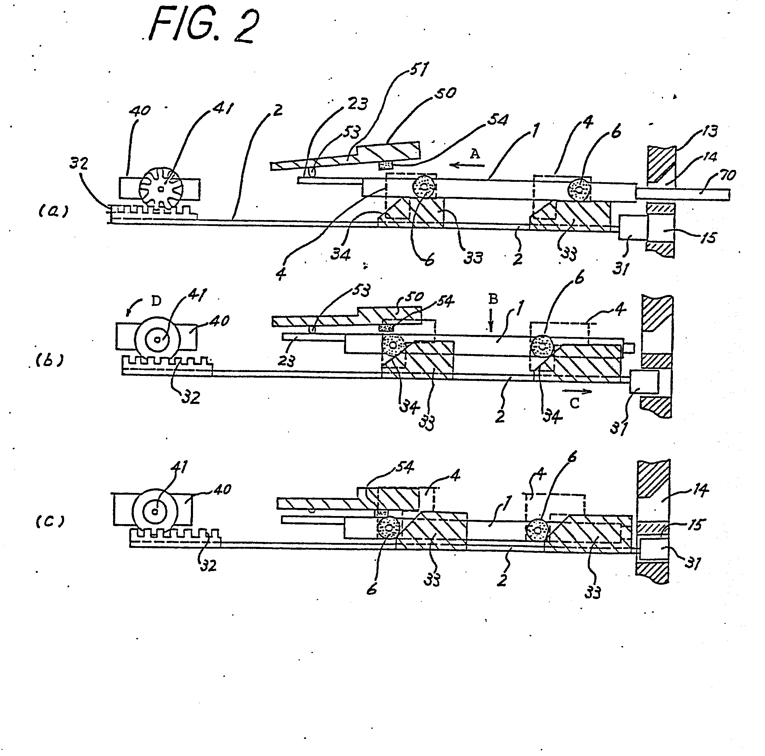

Fig. 2 illustrates main features of the operating mechanism of a disc driver embodying the present invention. Fig. 2 gives side views, (a), (b) and (c), of main parts of the floppy disc driver relevant to loading and unloading of a floppy disc.

A floppy disc 70 is inserted into a case 1 from an opening 14 provided in a front panel 13 of the disc driver. Fig. 2 (a) shows this situation. Since the length (diameter) of the disc is larger than the length of the case 1, one end of the floppy disc protrudes from the opening 14, to the right as shown in the Figure.

In the description given hereinafter, an embodiment of the invention will be described as applied for use with hard-cased floppy discs: that is, cassettes. However, the present invention is not limited to application for use with cassettes. It can be applied for use with ordinary soft-cased or soft-jacket floppy discs.

The case 1 is provided on its two opposite sides with four rollers 6, which are each supported by the horizontal branch of an L-window 4 (two rollers, on one side of the case 1, can be seen in Fig. 2, with their L-windows 4 shown in broken lines). These L-windows are provided on both side walls of the disc driver (not shown). The case 1 is pulled to the left and downward by a spring, though this spring is not shown. Beneath the case 1 is provided an ejection plate 2. The ejection plate 2 is provided with an ejection button 31, which can be touched through a hole 15. On the ejection plate 2 are provided four pushers 33 (one for each roller 6 - two pushers can be seen in Fig. 2) each having a left-hand side tapered as shown to form a guide slope 34. The lower edge of the horizontal branch of each L-window 4 and the upper edge of the corresponding pusher 33 are parallel to each other, and each pusher 33 is positioned so that its guide slope 34 is aligned with the vertical branch of the corresponding L-window. The rollers 6 are positioned so as to simultaneously contact respective L-windows 4 and pushers 33. (This configuration will become more apparent with reference to Fig. 3).

On the ejection plate 2 there is provided a rack 32 which is coupled with a pinion 41. The pinion 41 is supported by a damper 40 which is fixed on the body of the disc driver (not shown).

A magnetic head 50 is supported by an arm 51, and has a magnetic sensor 54 which contacts the surface of a disc to read or write information on the magnetic medium on the disc surface.

Usually such a magnetic head is also provided on the lower side of the disc to contact the lower surface of the floppy disc. However, for the sake of simplicity, such a lower head is not shown in the Figure. The arm 51 has a finger 53 which is supported by a second arm 23 of the case 1. The left end of the arm 51 is supported by a horizontal bearing (not shown) so that the left end of the arm is movable vertically with respect to a disc surface. Though it is not shown in Figure 2, the arm is urged downwardly by a spring, towards the floppy disc. So, as shown in Fig. 2 (a), the magnetic head 50 is lifted up from the disc surface.

To load the cassette into the disc driver, the cassette 70 is further forced toward the left by hand to push it into the opening 14. Then the case 1 begins to slide to the left in the direction shown by arrow A. This sliding is accomplished by rolling of the rollers 6 to the left in the horizontal branches of the L-windows 4. At the same time the rollers 6 are rolling along the upper edges of the pushers 33.

When the case 1 is slid further leftwards, the rollers 6 pass the corners of the L-windows 4. The rollers 6 begin to move down the vertical branches of the L-windows, but in this case the rollers 6 roll down the guide slopes 34 of the pushers 33, because the vertical branches of the L-windows and the guide slopes are aligned with each other. This situation corresponds to Fig. 2 (b).

It will be clear from Fig. 2 (b), that as the rollers 6 roll down, the ejection plate 2 is slid to the right, in the direction shown by arrow C, because to the left the rollers 6 are stopped by the left side edges of the vertical branches of the L-windows 4. In such a manner, vertical motion of the case 1 is coupled and transferred to horizontal sliding motion of the ejection plate 2.

The motion of the ejection plate 2 is transferred to the pinion 41 via the rack 32. So, the pinion 41 begins to rotate as shown by arrow D in the Figure. The pinion 41 is rotatable in both directions around its axis, and its rotation is smooth but heavy, because it is damped by a damper 40. So, the sliding of the ejection plate 2, and hence the downward motion of the case 1, is damped although they are urged to move a spring (not shown).

As the case 1 moves down, the finger 53 which is supported by the second arm 23 of the case moves down, and hence the magnetic head 50 is slanted down gently until the magnetic sensor 54 contacts the disc surface as shown in Fig. 2 (c).  After this, the magnetic head contacts the disc surface with a predetermined spring force.  The case 1 continues to move down until the rollers 6 touch the ends of the vertical branches of the L-windows 4.  By this time, the ejection plate 2 is slid to the right, so the ejection button 31 is pushed out from the opening 15, and  at the same time, the case 1 and the cassette 70 are pulled down from the opening 14 as shown in the Figure. Thus, the loading of cassette into the disc driver is completed.

To unload the disc, the ejection button 15 is pushed to the left and a process the reverse of the above described loading process occurs, and the cassette 70 emerges from the opening 14.

As can be seen in the above description, the case 1 is always supported horizontally by four rollers 6, arranged on two opposite sides of the case, so twisting of the cassette never occurs.  Moreover, the damping mechanism required by this process needs only slow down the horizontal sliding motion of the ejection plate 2.  This is much more satisfactory than the previous mechanism which couples a pinion with a projection of the case by its horizontal motion, and damps its vertical motion by the pinion positioned  at one end of the case.  Since damping mechanisms using rack and pinion as described with respect to the present embodiment are very popular, parts such as the rack, pinion and oil damper are available cheaply on the market.

The damping mechanism employed in embodiments of the invention is not limited to that described above:  any other suitable mechanism, such as an oil damped piston for example, may be used.

Detailed structure and configuration of a disc driver having a mechanism embodying the present invention will now be described with reference to Figs. 3, 4 and 5.

Fig. 3 is an exploded perspective view of a disc driver illustrating arrangement and relative positioning of parts. Figs. 4 and 5 are a top view and a side view of the driver.

The disc driver is constructed with a base body 10 made of aluminum by casting for example. At a center part of the body 10 there is provided a motor driving mechanism 11 which includes a holding mechanism for holding an inserted floppy disc and a motor to rotate the disc. Magnetic head 50 is supported by an arm 51 and positioned centrally with respect to the body 10. The arm 51 is provided on both sides with a finger 53. A part of a lower magnetic head 50' can be seen (in Figure 3), which head has similar form to that of magnetic head 50. On the body 10 is also provided a pinion 41 whose rotational motion is damped by a damper 40, which may be an oil damper for example.

Generally, the vertical position of the lower magnetic head 50' is fixed, and the lower head does not have to be shifted up and down for disc loading and unloading, because the floppy disc moves down onto the lower magnetic head 50'. Thus, an arm similar to arm 51, and other mechanisms for shifting the lower head, are generally unnecessary. Of course, the present invention does not exclude the application to the lower magnetic head of a mechanism similar to that applied in respect of the upper head 50. However, in the explanation hereinafter, it is assumed that the lower magnetic head is not moved in the vertical direction.

On the body 10 there is also provided a mechanism 12 for driving the magnetic heads in radial directions with respect to a loaded floppy disc. This mechanism is not directly related to the present invention so further description will not be given.

Further details of a magnetic head and its mechanisms can be seen in, for example, U.S. Patent 4 151 573 by Tandon et al.

On both sides of the body 10 side walls 60 are fixed, and an ejection plate 2 is placed between them. The ejection plate 2 has an ejection button 31 which is aligned to an opening 15. The centre part of the ejection plate 2 is cut out as shown (Figure 3) to provide space for the motor driving mechanism 11 and the magnetic heads. One end of the ejection plate is extended and is provided with a rack 32 which gears with the pinion 41. On both sides of the ejection plate are formed projections 35 and pushers 33 having tapers which provide guide slopes 34. Though detailed description is omitted, it will be clear that the ejection plate 2 can slide on the body 10 along the side walls 60. However, the range of such sliding motion is limited by the projections 35 which slide in cut-outs 64 made in the side walls 60. The sliding motion of the ejection plate 2 is transferred to the pinion 41 by the rack 32, and the rotational motion of the pinion 41 is damped by the oil damper 40 for example. On the side walls 60, there are provided L-windows 4.

Case 1 is placed on the ejection plate 2. The case 1 is supported by rollers 6 provided on its two sides. One roller 6 is shown enlarged in Fig. 3. As can be seen, the roller 6 has a shape much like a top, and has an outer roller 26 and an inner roller 27 on opposite sides of a flange 24. The axis of each roller 6 is fixed to the case 1, the outer roller 26 thereof is placed in the corresponding L-window 4, the inner roller 27 thereof is placed on the upper edge of the pusher 34. Flange 24 rolls in a gap between the relevant side wall 60 and the relevant pusher 33. Therefore, the case 1 slides guided by these rollers, L-windows and pushers, and can move smoothly horizontally and vertically along the L-windows. On both sides of the case 1 there are provided projections 25 which are coupled with respective hooks 62 on the respective side walls 60 by respective springs 63. Thus, the case 1 is pulled downwards and backwards by the springs 63.

The upper surface plate of the case 1 is cut out as shown in Fig. 3 to provide a space for the driving mechanism and magnetic head mechanism. On the two sides of the cut the case extends to form second arms 23. The second arms 23 support the fingers 53 on the arm 51 to move (lift) the magnetic head 50. On the upper surface of the case 1 can be seen a lever 21 which is pulled in one direction by a spring 22. This lever works to open or close a slide cover of a disc cassette when it is inserted into the case 1, to open or close a window for exposing the floppy disc surface for contact with a magnetic head. Such mechanism is not directly relevant to the present invention and further description will not be given.

Fig. 4 is a view from above and Fig. 5 is a side view of the mechanism of the present embodiment of the invention. A disc cassette is inserted from the upper end of the mechanism, as seen in those Figures, where a front panel 13 is located. Ejection button 31 is used to unload the cassette from the disc driver. It will be clear that the mechanism described in detail with respect to Figs. 3 to 5 provides a process for loading and unloading of a cassette in the manner described with reference to Fig. 2. Such mechanism is applicable to cassette type floppy discs. However, it will be clear that the application of such a mechanism is not limited to a disc driver for a hard-cased floppy disc. It can be applied to any type of disc driver for ordinary soft jacket floppy discs.

It will also be apparent that by applying a mechanism as disclosed above, up and down movements of the case are smoothed, and contact between a magnetic head and the surface of a floppy disc when it is loaded into the disc driver is gentle, so scratching or damage to the magnetic media on the disc surface or to the magnetic head is reduced. Moreover, the assembly of the mechanism is easier, and the operation of the disc driver is smooth and reliable.

Other embodiments of the invention may involve variations of the mechanism described above. For example, various types of damping mechanism for slowing down the horizontal motion of the case 1, and/or various types of spring mechanism for moving the case or the ejection plate may be employed, and so on.

It will be clear that references to vertical and horizontal movements, and similar references, refer to movements, or vector components of a main movement, referred to locally defined horizontal and vertical directions, e.g. directions defined with reference to the main surfaces of a loaded floppy disc, horizontal being parallel to such surfaces and vertical being orthogonal to such surfaces.

An embodiment of the present invention provides a mechanism of a floppy disc driver for contacting a magnetic head gently onto the surface of a floppy disc to prevent the magnetic head and floppy disc surface from being scratched or damaged by the loading operation of the floppy disc. A floppy disc is inserted into a case of the disc driver and pushed in through an insertion opening. The case slides horizontally and then moves vertically. The vertical motion of the case is transferred to a horizontal sliding motion of an ejection plate, which is used for unloading the floppy disc. The case is provided on its two sides with rollers which roll, and guide the case, along L-shaped cut windows on the two sides of the disc driver.  At the same time the rollers roll on edges of pushers provided on the ejection plate corresponding to the rollers.  One side of each pusher is tapered forming a guide slope.  When the rollers roll down the guide slopes, they push the ejection plate horizontally, so the vertical motion of the case is transferred to the horizontal motion of the ejection plate.  This horizontal sliding motion of the ejection plate is damped, for example, by a rack and oil-damped pinion.  Thus, the vertical motion of the case is slowed down and the magnetic head supported by the case goes down gently onto the surface of the floppy disc.

## CLAIMS

1. A floppy disc driver mechanism, for bring about gentle contact between a magnetic head (50) of the driver and a surface of a floppy disc (70) when the floppy disc is loaded into the floppy disc driver, comprising:

a case (1) into which the floppy disc (70) is inserted, said case being movable horizontally (in parallel with the main surfaces of the inserted floppy disc) and vertically (orthogonally or perpendicularly with respect to the main surfaces of the inserted floppy disc) in accordance with a cut window arrangement (4) provided on two sides of the floppy disc driver;

an arm (51) supporting the magnetic head, a portion (53) of the arm being supported by the case (1) so as to provide up/down movement of the magnetic head (50) away from/towards the surface of the floppy disc accordingly as the case moves vertically;

an ejection plate (2) provided in parallel to the case (1), being horizontally slidable;

coupling means (6, 33, 34) operable to couple sliding motion of the ejection plate (2) to vertical motion of case (1); and

damping means (32, 40, 41) operable to damp sliding motion of the ejection plate (2).

2. A mechanism as claimed in claim 1, wherein said coupling means (6, 33, 34) comprises:

rollers (6) provided on two sides of said case (1), each roller being rotatable along an edge of said cut window arrangement (4); and

pushers (33) provided on said ejection plate (2) in correspondence to each of said rollers (6), one side of each pusher (33) being tapered to form a guide slope (34) to guide vertical motion of said rollers (6), and at the same time to make the ejection plate (2) slide horizontally in accordance with vertical motion of said case (1).

3. A mechanism as claimed in claim 2, wherein said cut window arrangement (4) comprises L-shaped windows (4) each having a horizontal branch and a vertical branch, vertically downwardly aligned with respect to the said surface of the floppy disc, each guide slope (34) being positioned so as to align with the vertical branch of a corresponding L-shaped window (4) in a disposition of the mechanism before floppy disc loading begins.

4. A mechanism as claimed in claim 2 or 3, wherein each said roller (6) is formed so that one side thereof rolls on an edge of the cut window arrangement (4), and the other side thereof rolls on the edge of a pusher (33).

5. A mechanism as claimed in claim 4, wherein each said roller (6) comprises:

an outer roller (26), which rolls on the edge of the cut window arrangement (4);

an inner roller (27), which rolls on the edge of a pusher (33); and

a flange (24) between the outer (26) and inner (27) rollers, said flange being located to rotate in a gap between a side wall (60) of the floppy disc driver, in which a relevant part of the cut window arrangement (4) is cut, and said pusher (33).

6. A mechanism as claimed in any preceding claim wherein said damping means comprises:

a damper (40) provided on a body (10) of the floppy disc driver;

a rack (32) provided on said ejection plate (2); and

a pinion (41) geared with said rack (32) and supported by said damper (40), rotational motion of said pinion (41) being damped by said damper (40).

7. A mechanism as claimed in claim 6, wherein said damper (40) is an oil damper.

8.    A mechanism as claimed in any preceding claim wherein said arm (51) is provided on two sides with fingers (53) for supporting the arm on the case (1).

9.    A mechanism of a floppy disc driver, for soft landing a magnetic head (50) on a surface of a floppy disc (70) inserted in the driver, comprising:

a case (1), arranged to receive the disc (70) upon insertion into the driver, moveable horizontally (that is, in the direction of insertion of the disc) and vertically,

means (50) linking vertical movement of the case (1) to movement of the head (50) into contact with the surface of the disc,

a plate (2), extending horizontally, slideable horizontally,

damper means (32, 40, 41) operable to damp horizontal sliding motion of the plate (2), and

coupling means (4, 6, 34), coupling vertical movement of the case (1) with horizontal sliding motion of the plate (2).

10.    A mechanism as claimed in claim 9, wherein the coupling means include guide members (6) provided on opposite sides of the case (1) engaging with fixed cut-out windows (4) shaped to direct the guide members (6) and hence constrain movement of the case (1), and inclined bearing surfaces (34) fixed to the plate (2) which engage the guide members (6) in vertical movement of the case (1) so that, when the case (1) is constrained to move vertically with the guide members (6) those members act upon the inclined bearing surfaces and cause horizontal motion of the plate (2).

# FIG. 1

(a)

(b)

1/5

0197515

# FIG. 2

(a)

(b)

(c)

FIG. 3

FIG. 4

0197515

# FIG. 5

**EUROPEAN SEARCH REPORT**

European Patent Office

## DOCUMENTS CONSIDERED TO BE RELEVANT

EP 86104564.9

| Category | Citation of document with indication, where appropriate, of relevant passages | Relevant to claim | CLASSIFICATION OF THE APPLICATION (Int. Cl.4) |
|---|---|---|---|
| Y | EP - A1 - 0 082 505 (HITACHI) <br> * Fig. 1-6; abstract * <br> -- | 1-4,9, 10 | G 11 B 17/035 |
| Y | US - A - 3 772 666 (SCHOLZ) <br> * Fig. 5,6; abstract * <br> -- | 1-4,9, 10 | |
| A,P | EP - A2 - 0 146 179 (PHILIPS') <br> * Fig. 1,2,6,7; claims 1-5 * <br> -- | 1-4,9, 10 | |
| A | DE - A1 - 3 338 266 (ALPS) <br> * Fig. 1-4; claims 1-5 * <br> -- | 1-4,9, 10 | |
| D,A | US - A - 4 151 573 (TANDON) <br> * Fig. 1-5; abstract * <br> ---- | 1,10 | |

TECHNICAL FIELDS SEARCHED (Int. Cl.4)

G 11 B 5/00

G 11 B 17/00

B 65 D 85/00

The present search report has been drawn up for all claims

| Place of search | Date of completion of the search | Examiner |
|---|---|---|
| VIENNA | 23-06-1986 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82